# FASCICULE DE BREVET EUROPEEN

(11) **EP 0 759 153 B1**
(45) Date de publication et mention de la délivrance du brevet: **10.04.2002**
(21) Numéro de dépôt: 96904919.6
(22) Date de dépôt: 29.02.1996
(51) Int. Cl.: G01F 11/46

(54) **PROCEDE ET DISPOSITIF DOSEUR DE PRODUITS PATEUX**
VERFAHREN UND VORRICHTUNG ZUR DOSIERUNG VON PASTÖSEN PRODUKTEN
METHOD AND DEVICE FOR DOSING PASTY PRODUCTS

(30) Priorité: 01.03.1995 FR 9502349
(43) Date de publication de la demande: 26.02.1997
(73) Titulaire: Etablissements Cazas, 93000 Bobigny (FR)
(72) Inventeur: DRONET, Jean-Marc, F-61210 Neuvy-au-Houlme (FR)
(74) Mandataire: Viard, Jean
(86) Numéro de dépôt international: FR9600311
(87) Numéro de publication internationale: WO9627119

(56) Documents cités:
- EP-A- 0 539 646
- DE-A- 1 542 383
- DE-A- 3 224 205

## Description

La présente invention a pour objet un procédé et un dispositif doseur de produits fluides, tels que des pâtes ou des produits liquides présentant une certaine viscosité, permettant à partir d'une masse de produit d'obtenir des doses individuelles de poids et de volume réguliers.

Dans ce domaine, la technique traditionnelle consiste à avoir recours à des dispositifs volumétriques. Dans ceux-ci, le produit est successivement amené dans un cylindre à partir duquel il est chassé par un piston animé d'un mouvement alternatif. C'est la section du cylindre et la course du piston qui déterminent la quantité de produit éjectée à chaque cycle. Mais ces dispositifs sont compliqués et d'un entretien coûteux en raison même de la consistance du produit.

Le document DE-A-32 24 205 divulgue un dispositif dans lequel une pâte est fragmentée à l'aide d'un couteau tournant. Mais ce dispositif ne peut fonctionner qu'avec une pâte ayant une certaine consistance. Dans EP-A- 0539 646, le produit est séparé par des buses commandées par des obturateurs, le produit étant distribué sur un ensemble de buses en ligne par une pression gazeuse. Mais les obturateurs ne fonctionnent pas de manière satisfaisante avec des produits visqueux. Par ailleurs un tel dispositif ne peut doser des produits contenant des éléments solides ou fibreux.

La présente invention a pour objet un dispositif de dosage permettant de pallier les inconvénients des dispositifs connus.

Selon la présente invention, le dispositif doseur de produits pâteux comprenant une trémie à l'intérieur de laquelle le produit est introduit en masse est caractérisé en ce que le fond de la trémie comprend au moins un trou de sortie partiellement obturé par une contre lame, au-dessus duquel tourne un couteau circulaire comprenant au moins une lame, le produit étant appliqué contre le couteau par une surpression exercée à la partie supérieure de la trémie.

Comme dans le cas des doseurs volumétriques, le problème à résoudre consiste à séparer une dose déterminée d'une masse de produits. Toutefois, selon la présente invention, c'est la rotation des lames de couteau qui effectue la séparation nécessaire d'un volume constituant une dose. Il est ainsi possible de constituer un doseur de conception très simple avec un minimum de pièces donc d'un prix de revient acceptable.

D'autres caractéristiques et avantages de l'invention apparaîtront au cours de la description qui va suivre de modes particuliers de réalisation, donnés uniquement à titre d'exemples non limitatifs, en regard des figures qui représentent :
- La Figure 1, une vue en perspective d'un doseur selon l'invention ;
- La Figure 2, une vue en coupe d'un couteau rotatif ;
- La Figure 3, une vue par dessus d'un couteau coupé selon la ligne III-III de la figure 2 ;
- La Figure 4, une vue d'un ensemble de couteaux et de leurs séquences de fonctionnement ;
- La Figure 5, un mode de réalisation particulier destiné à être utilisé avec les produits incluant des fibres ;
- La Figure 6, une vue schématique d'un mode simplifié de réalisation.

La présente invention peut être utilisée avec des produits pâteux tels que des sauces béchamel ou autres incluant des ingrédients tels que des légumes ou champignons, avec des épinards, ou avec des pâtes destinées à constituer des biscuits ou analogues.

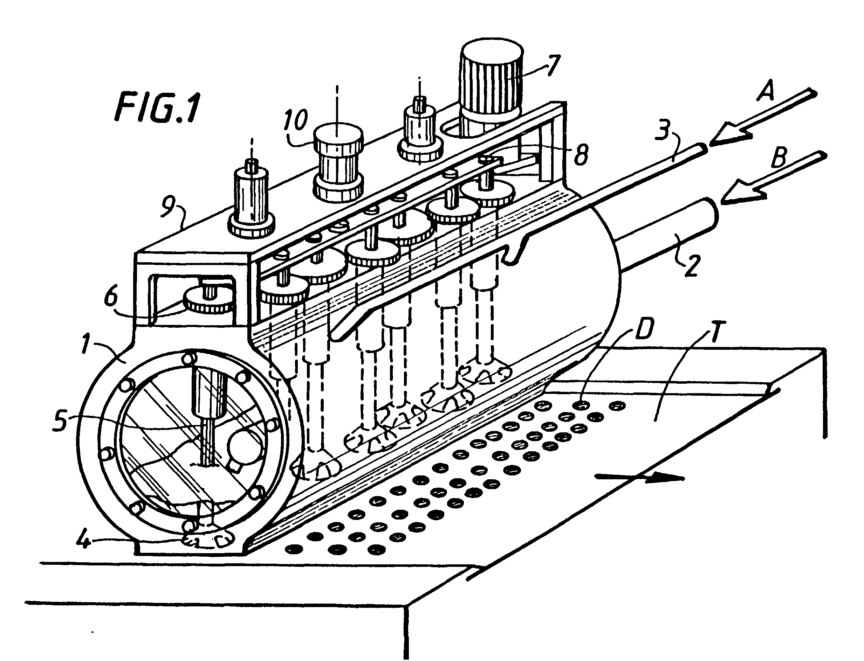

Sur la figure 1, on distingue une trémie 1 dans laquelle est introduite, par une canalisation 2, la pâte à doser et, par une canalisation 3, une pression de gaz, généralement de l'air ou de l'azote. A l'intérieur de la trémie sont montés des couteaux 4 entraînés en rotation par des axes 5 eux-mêmes entraînés par des engrenages 6 animés de mouvements de rotation de sens alternés par un moteur 7. Dans l'exemple représenté, la trémie est disposée au-dessus d'un tapis convoyeur T qui achemine les doses D obtenues vers un four ou une unité de surgélation ou tout autre dispositif approprié. Les engrenages 6 sont tourillonnés dans des paliers 8 inclus dans un carter 9 disposé à la partie supérieure de la trémie.

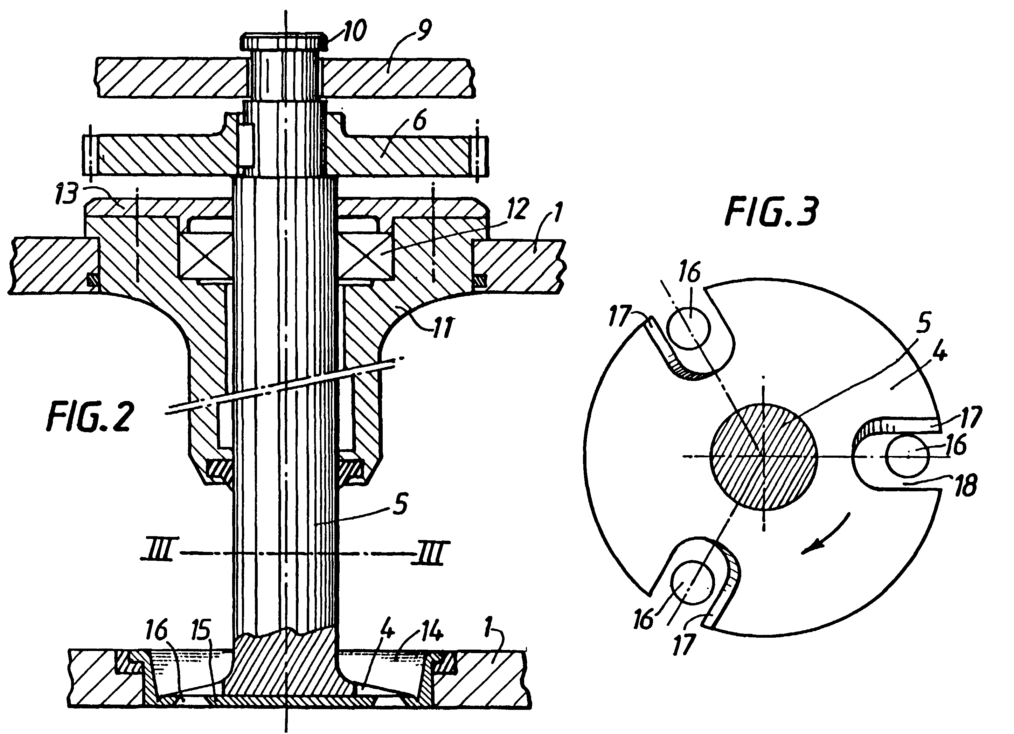

La figure 2 représente en coupe verticale un ensemble couteau/pignon 4, 6 inclus dans la trémie 1 et le carter 9. On retrouve sur cette figure l'arbre d'entraînement 5 sur lequel est monté par clavetage un pignon d'entraînement 6. L'arbre 5 est monté dans un palier 11 au moyen d'un roulement à bille ou analogue 12 fermé par une couvercle 13. L'étanchéité est assurée par différents joints (non référencés). La partie inférieure de la trémie 1 présente une série de trous ou d'alvéoles 14 fermés par une contre lame 15 présentant des ouvertures 16 de passage du produit. Le diamètre des ouvertures 16 détermine, en combinaison avec la surpression appliquée et la vitesse de rotation du couteau le volume de pâte qui est dosé à chaque tour ou fraction de tour du couteau. Le couteau 4 tourne à l'intérieur de l'alvéole 14.

Dans l'exemple représenté, comme cela apparaît mieux sur la figure 3, le couteau 4 comprend trois lames 17 réparties selon des angles de 120° sur toute la périphérie du disque. Le disque 4 tourne dans le sens horaire et la découpe est effectuée par les lames 17 disposées à la partie arrière des encoches. Les trous 16 de passage du produit, formés dans la contre lame apparaissent sur la figure 3 à l'intérieur des échancrures 18. Le mouvement de rotation des disques 4 permet à la pâte de passer lorsqu'une ouverture 18 arrive au-dessus d'un trou 16, l'ouverture étant immédiatement refermée après passage de la lame 17. En fonction de la largeur des échancrures 18 du disque 4, la quantité de matière à doser est déterminée en tenant compte, bien entendu, de la vitesse de rotation des disques 4. Il ressort des expériences effectuées que la masse de produits délivrée par les sorties 16 au cours de l'expérience, était de l'ordre de quatre grammes environ présentait un écart-type de 0,5. Bien entendu, les résultats obtenus dépendent également de la viscosité, elle-même fonction de la température.

Compte tenu du système adopté pour l'entraînement des couteaux, deux pignons 6 adjacents tournent en sens contraire ce qui assure un fonctionnement régulier. Mais tout autre entraînement connu peut bien évidemment être utilisé.

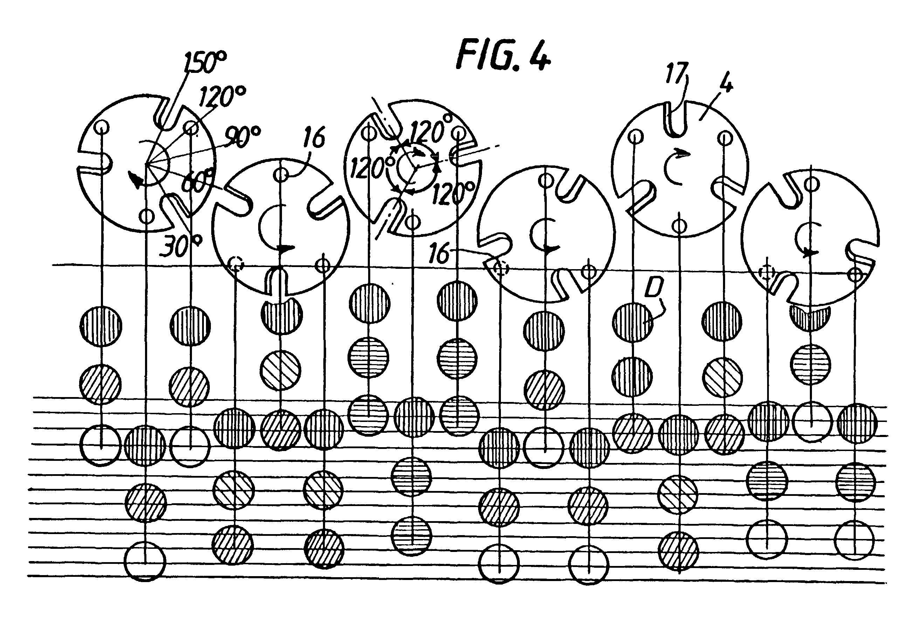

La figure 4 représente un ensemble de six disques 4 tournant alternativement dans un sens et dans l'autre. De préférence, et comme représenté sur la figure, les disques sont décalés angulairement de sorte que la coupe de la masse se produise d'une manière séquentielle continue ce qui permet d'éviter les à-coups. C'est à dire que lorsqu'un disque a terminé la coupe, le disque voisin commence son action de coupe et ainsi de suite. A cet effet, les axes des échancrures 18 de disques sont décalés angulairement de 30° par rapport aux axes du disque adjacent. Bien entendu, les couteaux et le sens de rotation de deux disques adjacents sont en sens inverse. Mais il serait possible d'utiliser un autre moyen d'entraînement dans lequel tous les disques tourneraient dans le même sens.

Comme cela apparaît sur la figure 4, chaque disque 4 libère successivement trois colonnes de doses ou pastilles. Lesdits pastilles ne sont pas alignées mais cela est pratiquement de peu d'importance, dans le mesure où les produits seront ultérieurement conditionnés en vrac.

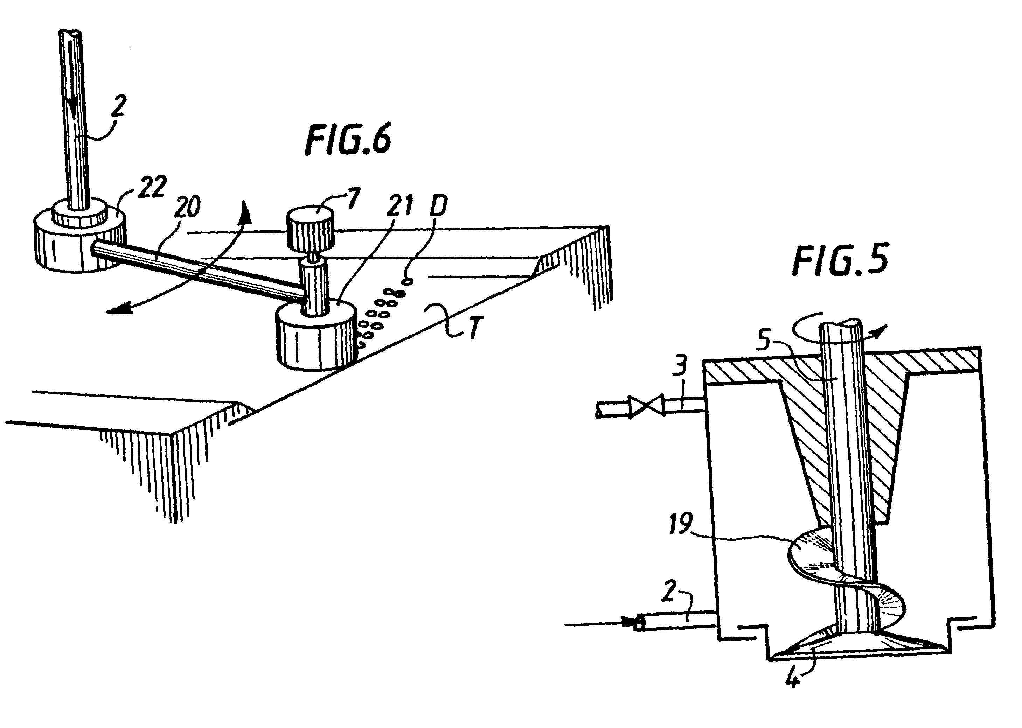

Dans le cas où la masse pâteuse inclût des fibres ou analogues, par exemple, dans le cas d'une sauce béchamel avec des morceaux de champignons ou d'épinard à la crème, il peut arriver que la pression au-dessus de la masse pâteuse ne soit pas suffisante. Dans ce cas, on utilise avantageusement le dispositif représenté sur la figure 5. Sur cette figure qui ne représente qu'un seul disque 4 toujours entraîné par un arbre 5, on distingue le conduit d'alimentation en pâte devant être séparé en dose, le conduit 3 de surpression interne appliquant le produit contre le couteau 4. Ce dispositif se différencie de celui des figures précédentes en ce que l'on prévoit dans le bas de l'arbre 5 une vis de gavage 19 qui ajoute une pression mécanique dirigeant le produit pâteux vers le couteau, à la surpression du gaz introduit par la canalisation 3. Dans ces conditions, les fibres ou matières plus dures contenues dans la pâte sont coupées d'une manière nette sans problème et les doses restent régulières quelle que soit la nature des fibres où autres corps hétérogènes du mélange.

La figure 6 représente une variante de réalisation dans laquelle un moteur 7 entraîne une tête unique 20 de dosage.

Le produit arrive comme précédemment dans une canalisation 2, sous pression, la canalisation à partie de laquelle s'étend un bras creux qui peut être souple ou rigide, la seconde extrémité du bras 20 débouchant dans la tête 21. Cette tête inclût un couteau 4 tel que celui qui a été décrit précédemment, à plusieurs lames, et le bras 20 qui peut être souple ou rigide est entraîné par le moyeu 22 selon un mouvement oscillant dont l'amplitude correspond à la largeur du tapis convoyeur T. Les doses D sortent comme précédemment par les trous d'une contre plaque et se répartissent plus ou moins régulièrement sur le tapis T. Le processus de séparation des doses est le même que précédemment. Comme dans toutes les machines destinées à l'alimentation il est indispensable que la doseuse selon l'invention, puisse être nettoyée sur place et d'une manière efficace, soit en fin de journée, soit en cas de remplacement d'un produit par un autre. A cet effet, comme cela apparaît sur les figures 1 et 2, un bouton 10 est prévu à la partie supérieur d'un arbre 5 ou sur la plaque portant les polices 8. En soulevant le bouton 10 celui-ci coulisse dans le carter 9, tous les arbres 5 sont soulevés par coulissement dans les paliers 11. Les couteaux 4 sont alors dégagés des alvéoles 14 et des produits détergents peuvent circuler dans la trémie 1 pour chasser les résidus et assurer la protection antibactérienne.

Il va de soi que de nombreuses variantes peuvent être apportées, notamment par substitution de moyens techniques équivalents, sans sortir pour cela du cadre de l'invention.

## Revendications

1. Dispositif doseur de produits pâteux, comprenant une trémie d'alimentation (1) en produits pâteux dont le fond présente au moins un alvéole (14), un couteau en forme de disque (4) tournant à l'intérieur de l'alvéole et présentant au moins une lame (17), un moteur (7) pour entraîner ledit disque et une canalisation (3) raccordée à la partie supérieure de la trémie de façon à introduire dans cette trémie un gaz sous pression servant à appliquer le produit contre le couteau sous l'action de ladite pression, ledit alvéole présentant au moins une ouverture (16) de passage du produit correspondant avec au moins une échancrure (18) formée dans ledit disque de telle sorte que le disque, en tournant, ouvre puis ferme périodiquement ladite ouverture.

2. Dispositif selon la revendication 1, **caractérisé en ce que** le couteau (4) comprend plusieurs lames radiales (17) régulièrement espacées formant les bords d'échancrures (18).

3. Dispositif selon l'une des revendications 1 ou 2, **caractérisé en ce qu'**il comprend plusieurs couteaux entraînés séquentiellement par des engrenages (6) reliés mécaniquement à l'arbre moteur.

4. Dispositif selon l'une quelconque des revendications précédentes, **caractérisé en ce que** l'arbre (5) d'entraînement des couteaux (4) est pourvu d'une hélice de gavage.

5. Dispositif selon la revendication 1, **caractérisé en ce qu'**il comprend une tête de distribution (21) alimentée par une canalisation (20) et animée d'un mouvement oscillant sur la largeur d'un tapis convoyeur T.

6. Procédé de dosage de matières pâteuses contenues dans une trémie et appliquée avec pression sur une ouverture au dessous de laquelle tourne un couteau, **caractérisé en ce qu'**il consiste à couper des volumes réguliers de matières (D), à partir d'une masse de pâte à l'aide d'au moins un disque (4) tournant au-dessus d'ouvertures (16) de sortie du produit, les volumes coupés étant acheminés par des ouvertures (16).

## Claims

1. Device for dosing pasty products, comprising a pasty product feeding hopper (1) the bottom of which has at least one cavity (14), a disc shaped knife (4) rotating inside the cavity and having at least one blade (17), a motor (7) for driving said disc, and a pipe (3) connected to the upper part of the hopper in order to introduce in this hopper a gas under pressure used for applying the product against the knife under action of said pressure, said cavity having at least one product passage aperture (16) corresponding with at least one cut-out portion (18) formed in said disc whereby the disc, while rotating, periodically opens then closes said aperture.

2. Device according to claim 1, **characterized in that** the knife (4) comprises a plurality of regularly spaced radial blades (17) that forms edges of cut-out portions (18).

3. Device according to one of claims 1 or 2, **characterized in that** it comprises a plurality of knives that are sequentially driven by means of gears (6) mechanically connected to the motor shaft.

4. Device according to anyone of the preceding claims, **characterized in that** the shaft (5) for driving the knives (4) is provided with a stuffing screw.

5. Device according the claim 1, **characterized in that** it comprises a distributing head (21) fed by means of a pipe (20) and oscillating along the width of 'a conveyor belt T.

6. Method for dosing pasty products contained in a hopper and applied with pressure onto an aperture beneath which a knife is rotated, **characterized in that** it consists in cutting regular volumes of materials (D), from a pasty mass by means of at least one disc (4) that rotates above product outlet apertures (16), the so cut volumes being directed through apertures (16).

## Patentansprüche

1. Vorrichtung zur Dosierung von pastösen Produkten, umfassend einen Fülltrichter (1) für pastöse Produkte, dessen Boden zumindest eine Zelle (14) aufweist, ein scheibenförmiges Messer (4), das sich im Inneren der Zelle dreht und das zumindest eine Klinge (17) aufweist, einen Motor (7) um die besagte Scheibe anzutreiben, und eine an den oberen Teil des Trichters so angeschlossene Leitung (3), dass in diesen Trichter ein Druckgas eingeleitet wird, das dazu dient, das Produkt unter der Wirkung des besagten Drucks gegen das Messer zu drücken, wobei diese Zelle zumindest eine für das Produkt vorgesehene Durchgangsöffnung (16) aufweist, die zumindest einem in der besagten Scheibe ausgeführten Ausschnitt (18) entspricht, so dass die Scheibe, bei ihrer Drehung, periodisch diese Öffnung freigibt und anschliessend schliesst.

2. Vorrichtung gemäss Anspruch 1, **dadurch gekennzeichnet, dass** das Messer (4) mehrere radiale gleichmässig beabstandete Klingen (17) aufweist, die die Ausschnittsränder (18) bilden.

3. Vorrichtung gemäss einem der Ansprüche 1 oder 2, **dadurch gekennzeichnet, dass** sie mehrere Messer aufweist, die sequentiell von mechanisch mit der Antriebswelle verbundenen Getrieben (6) angetrieben werden.

4. Vorrichtung gemäss einem der vorhergehenden Ansprüche, **dadurch gekennzeichnet, dass** die Antriebswelle (5) der Messer (4) mit einer Ladewendel ausgerüstet ist.

5. Vorrichtung gemäss Anspruch 1, **dadurch gekennzeichnet, dass** sie einen von einer Leitung (20) gespeisten Verteilerkopf (21) aufweist, der eine oszillierende Bewegung über die Breite eines Förderbandes T ausführt.

6. Verfahren zur Dosierung von pastösen Produkten, die sich in einem Trichter befinden und die unter Druck an eine Öffnung angelegt werden, unter welcher sich ein Messer dreht, **dadurch gekennzeichnet, dass** es darin besteht, gleichmässige Volumen von Produkten (D) abzuschneiden, ausgehend von einer Pastemasse, mit Hilfe zumindest einer Scheibe (4) die sich unterhalb von Produktausgangsoffnungen (16) dreht, wobei die abgeschnittenen Volumen durch die Öffnungen (16) zugeführt werden.
